## Europäisches Patentamt
## European Patent Office
## Office européen des brevets

(19)

(11) Numéro de publication: **0 088 685**
**A1**

# DEMANDE DE BREVET EUROPEEN

(21) Numéro de dépôt: **83400438.4**

(22) Date de dépôt: **04.03.83**

(51) Int. Cl.³: **B 65 G 69/10**

(30) Priorité: **04.03.82 FR 8203568**

(43) Date de publication de la demande: **14.09.83**
**Bulletin 83/37**

(84) Etats contractants désignés: **AT BE CH DE FR GB IT LI LU NL SE**

(71) Demandeur: **Delattre-Levivier, 16 boulevard Malesherbes, F-75008 Paris (FR)**

(72) Inventeur: **Riboulet, Jacques, 32 avenue des Mésanges, F-94360 Brie-sur-Marne (FR)**
Inventeur: **Couesnon, Bernard, 17 rue du Retrait, F-75020 Paris (FR)**

(74) Mandataire: **Saint-Martin, René et al, CREUSOT-LOIRE 15 rue Pasquier, F-75383 Paris Cedex 08 (FR)**

(54) **Procédé et appareil de mise en tas de matières.**

(57) La présente invention se rapporte à un procédé et à un appareil permettant de former sur une aire de stockage plane, un tas de matière déversable au moyen d'un transporteur continu de déversement animé d'un mouvement de va-et-vient.

L'appareil comporte un transporteur continu de déversement latéral (4) alimenté par un transporteur continu principal (5) dit de parc et animé d'un mouvement de va-et-vient, et il est caractérisé par le fait qu'il comporte des moyens pour régler le débit d'alimentation dudit transporteur de déversement latéral (4) de manière à la réduire graduellement aux extrémités du tas et à accumuler dans un stock tampon l'excédent momentané de matière provenant de ces réductions de débit aux extrémités pour recycler cet excédent vers ledit transporteur de déversement latéral.

## "Procédé et appareil de mise en tas de matières"

La présente invention se rapporte à un procédé et à un appareil permettant de former sur une aire de stockage plane, un tas de matière déversable au moyen d'un transporteur continu de déversement animé d'un mouvement de va-et-vient.

On connaît des appareils de mise en tas comportant, sur un châssis guidé sur une voie et animé d'un mouvement de va-et-vient, un transporteur continu de déversement latéral s'étendant en porte-à-faux au-dessus du tas à constituer. Ce transporteur mobile est alimenté par un autre transporteur continu statique dit de parc. La matière se déversant à l'extrémité du transporteur de déversement latéral se dépose en une série de couches du fait des mouvements de va-et-vient successifs. La matière est ensuite reprise par un appareil travaillant suivant un front de taille incliné qui progresse selon l'axe longitudinal du tas.

La matière déversée sur le tas n'a pas une composition constante dans le temps (matière venant d'une carrière de cimenterie par exemple). Dans les tas obtenus avec les appareils connus, si l'on compare une coupe/effectuée (section maximum) suivant le front de reprise dans la partie de plein tas à une coupe/effectuée (section inférieu) parallèlement dans une extrémité, les rapports entre les sections/couches pour des diverses une des coupes sont différents des rapports pour l'autre coupe.

Dans certaines installations industrielles, on constitue des tas d'homogénéisation dans le but d'obtenir une composition moyenne relativement constante à la reprise. Cependant le défaut d'homogénéité entre les extrémités et la zone centrale de plein tas est un défaut persistant qui peut perturber la marche de certains équipements faisant partie de ces installations.

La présente invention fournit un procédé et un appareil qui permettent de constituer un tas de section triangulaire dans lequel toute tranche correspondant au front de taille de l'appareil de reprise comporte toutes les couches déposées successivement, la section de chacune d'elles représentant un pourcentage constant de la section totale de ladite tranche.

L'invention s'applique notamment à la constitution de stocks d'homogénéisation de matières premières.

Le procédé selon l'invention consiste à déverser la matière sur une aire de stockage au moyen d'un transporteur continu de déversement latéral alimenté par un transporteur continu principal et animé d'un mouvement de va-et-vient et il est essentiellement caractérisé par le fait qu'il consiste à régler le débit d'alimentation dudit transporteur de déversement latéral de manière à le réduire aux extrémités du tas et à accumuler dans un stock tampon l'excédent momentané de matière provenant de ces réductions de débit aux extrémités et à recycler ensuite cet excédent vers ledit transporteur de déversement latéral.

Selon une caractéristique, le procédé consiste à régler le débit d'alimentation du transporteur de déversement latéral en partageant le courant de décharge du transporteur principal en deux veines et en réglant les débits relatifs de ces deux veines, l'une allant directement au transporteur continu de déversement latéral l'autre étant accumulée et recyclée.

L'appareil selon l'invention comporte un transporteur continu de déversement latéral alimenté par un transporteur continu principal dit de parc et animé d'un mouvement de va-et-vient et il est caractérisé par le fait qu'il comporte des moyens pour régler le débit d'alimentation dudit transporteur de déversement latéral de manière à le réduire graduellement aux extrémités du tas et à accumuler dans un stock tampon l'excédent momentané de matière provenant de ces réductions de débit aux extrémités pour recycler cet excédent vers ledit transporteur de déversement latéral.

Selon une caractéristique de l'invention, le transporteur continu principal alimente un dispositif de partage qui comprend d'une part deux voies divisant le courant de matière en deux veines dont l'une va au transporteur de déversement latéral et dont l'autre va à des moyens d'accumulation et de recyclage et d'autre part de moyens de réglage des débits relatifs de ces deux veines.

Selon une caractéristique, les moyens d'accumulation et de recyclage comprennent un transporteur continu alimenté par une voie du dispositif de partage et qui distribue la matière sur le transporteur continu principal, en amont dudit dispositif de partage.

L'invention va maintenant être décrite avec plus de détails en se référant à des modes de réalisation donnés à titre d'exemples et illustrés par les dessins annexés.

La figure 1 est une vue en coupe longitudinale d'un tas obtenu par le procédé selon l'invention.

La figure 2 est une vue en élévation d'un premier mode de réalisation de l'appareil selon l'invention.

La figure 3 est une vue de dessus de la figure 2.

La figure 4 est une vue selon IV-IV des figures 2 et 3.

La figure 5 est une vue d'un second mode de réalisation de l'appareil selon l'invention.

La figure 6 est une vue en élévation d'un troisième mode de réalisation de l'appareil selon l'invention.

La figure 7 est une coupe selon VII-VII des figures 5 et 6.

La figure 8 est une vue en élévation d'un quatrième mode de réalisation de l'appareil selon l'invention.

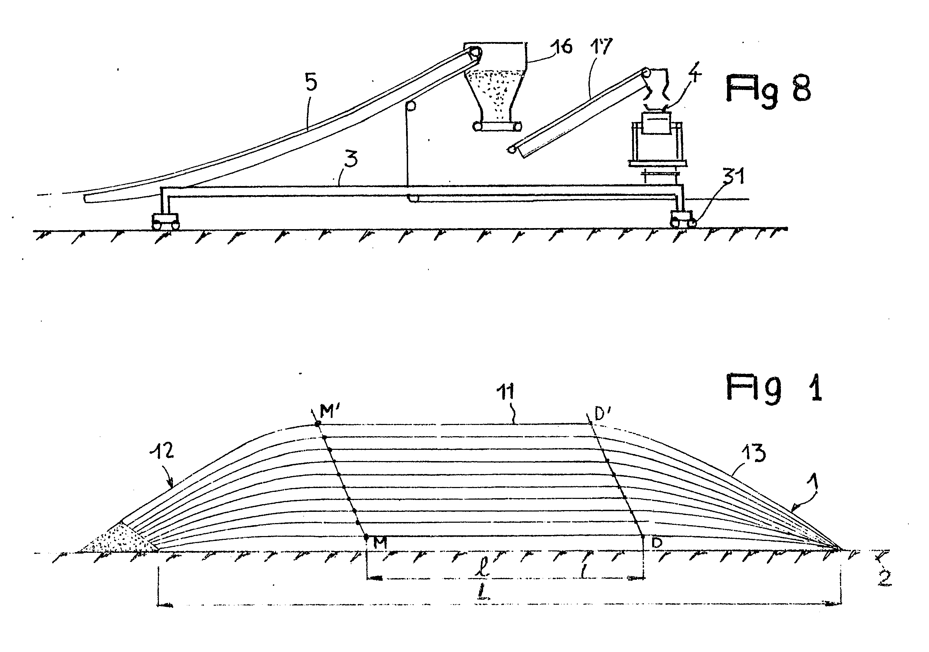

En se référant à la figure 1, le procédé selon l'invention consiste à déverser, au-dessus d'une aire de stockage plane 2, des couches successives de matière qui forment un tas de section triangulaire comportant une partie de plein tas 11 et des extrémités formant des buttes arrondies 12 et 13. On déverse les couches successives à l'aide d'un transporteur continu de déversement latéral animé d'un mouvement de va-et-vient sur une course de longueur constante repéré L correspondant à la longueur du tas. Ce transporteur continu de déversement est alimenté par un transporteur continu principal statique dit de parc.

On alimente le transporteur continu de déversement latéral à débit constant durant une partie centrale 1 de la course qui correspond à la partie de plein tas. Sur les parties extrêmes de la course qui correspondent aux extrémités du tas, on règle le débit de décharge ou d'alimentation du transporteur de déversement latéral de manière graduelle et en continu en le réduisant du centre vers l'extrémité. Cette réduction du débit est effectuée suivant une loi qui évolue en même temps que la constitution du tas. On accumule simultanément l'excédent de matière provenant de ces réductions de débit dans un stock tampon et on recycle ensuite cet excédent vers ledit transporteur de déversement latéral pendant la course entière ou pendant une partie de la course.

On règle le débit du transporteur de déversement latéral en partageant le courant de sortie du transporteur de parc par deux voies qui canalisent deux veines de matière et en réglant les débits relatifs de ces deux veines dont l'une va directement audit transporteur de déversement latéral et dont l'autre, dérivé, est accumulée avant d'être recyclée.

Pendant la course centrale, la veine d'alimentation directe a un débit maximum alors que la veine dérivée a un débit nul. Au contraire pendant les parties extrêmes de la course, le débit de la veine d'alimentation directe est réduit par rapport au débit sur la partie centrale de la course, le débit de la veine dérivée étant variable.

La veine dérivée est accumulée avant d'être recyclée. On peut recycler l'excédent de matière de la veine dérivée en redistribuant cette matière sur le transporteur continu principal dit de parc, en amont du point de partage du courant en deux veines. On peut aussi recycler l'excédent de matière de la veine dérivée en redistribuant cette matière sur le transporteur continu de déversement latéral, en aval du point de partage du courant en deux veines.

On déplace le point de début et de fin de réduction du débit à chaque nouvelle couche ou groupes de couches de manière que la distance entre ce point et la pointe du tas-côté début de reprise- augmente et que la distance entre ce point et la pointe du tas-côté fin de reprise-diminue au fur et à mesure de la constitution du tas (courbes ou lignes inclinés M'M et D D').

Chaque appareil illustré par les figures comporte une structure 3 sur laquelle est monté un transporteur continu de déversement latéral 4 qui s'étend en porte-à-faux au-dessus de l'aire de stockage 2. Cette structure est animée d'un mouvement rectiligne alternatif et à cet effet elle est munie d'éléments de roulement/31 au moyen desquels elle est guidée sur une voie rectiligne 32. Cette structure pourrait être animée d'un mouvement de va-et-vient autour d'un pivot.

Le transporteur continu de déversement latéral 4 du type à ruban est porté par une flèche qui de préférence est articulée par un axe d'articulation horizontal sur une monture 33. Un vérin permet de régler l'inclinaison de la flèche. Lorsqu'on veut pouvoir constituer deux tas côte à côte, la monture 33 est pivotante autour d'un axe vertical.

directement ou non

Le transporteur de déversement latéral 4 est alimenté/par un transporteur continu principal 5 de type à ruban dit transporteur de parc. La décharge de la matière entre le transporteur principal 5/qui est statique et le transporteur de déversement latéral 4 s'effectue de manière connue en soi . La matière se déversant de l'extrémité supérieure du transporteur de déversement latéral 4 forme des couches successives en chevrons et constitue un tas de section triangulaire dont l'axe longitudinal est parallèle à celui de la voie.

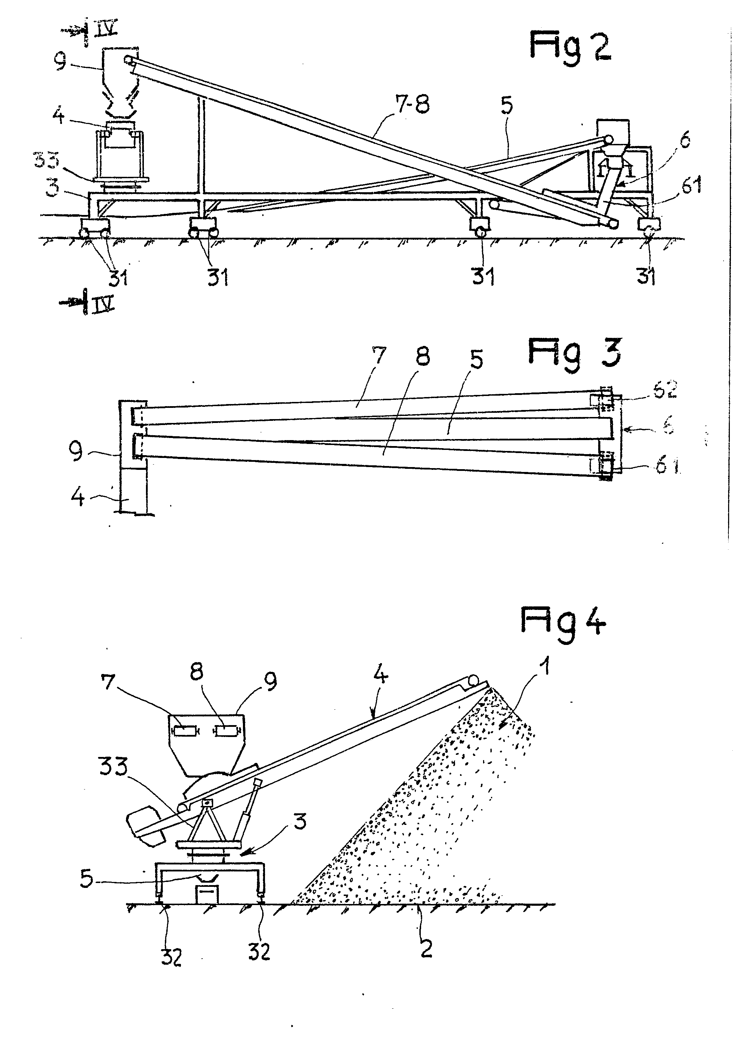

Dans les modes de réalisation des figures 2 à 7, le transporteur continu principal 5 alimente un dispositif de partage 6 qui comprend deux voies 61 et 62 divisant le courant de matière en deux veines. L'une des voies repérée 61-alimente directement le transporteur continu de déversement latéral 4 tandis que l'autre voie-repérée 62-alimente des moyens d'accumulation et de recyclage. Ce dispositif de partage comporte par ailleurs des moyens de réglage 63 (volet, etc...) qui permettent de régler les débits relatifs des deux veines à acheminer par les voies 61 et 62.

Dans le mode de réalisation des figures 2 à 4, les moyens d'accumulation et de recyclage comportent un transporteur continu d'accumulation 7 du type à bande qui est alimenté par la voie dérivée 62 de l'appareil de partage 6. Ce transporteur 7 est alimenté en parallèle avec un transporteur continu intermédiaire 8 qui reçoit la matière de la voie directe 61.

5

Les deux transporteurs 7 et 8 alimentent en commun le transporteur de déversement latéral 4 par l'intermédiaire d'une goulotte collectrice 9.

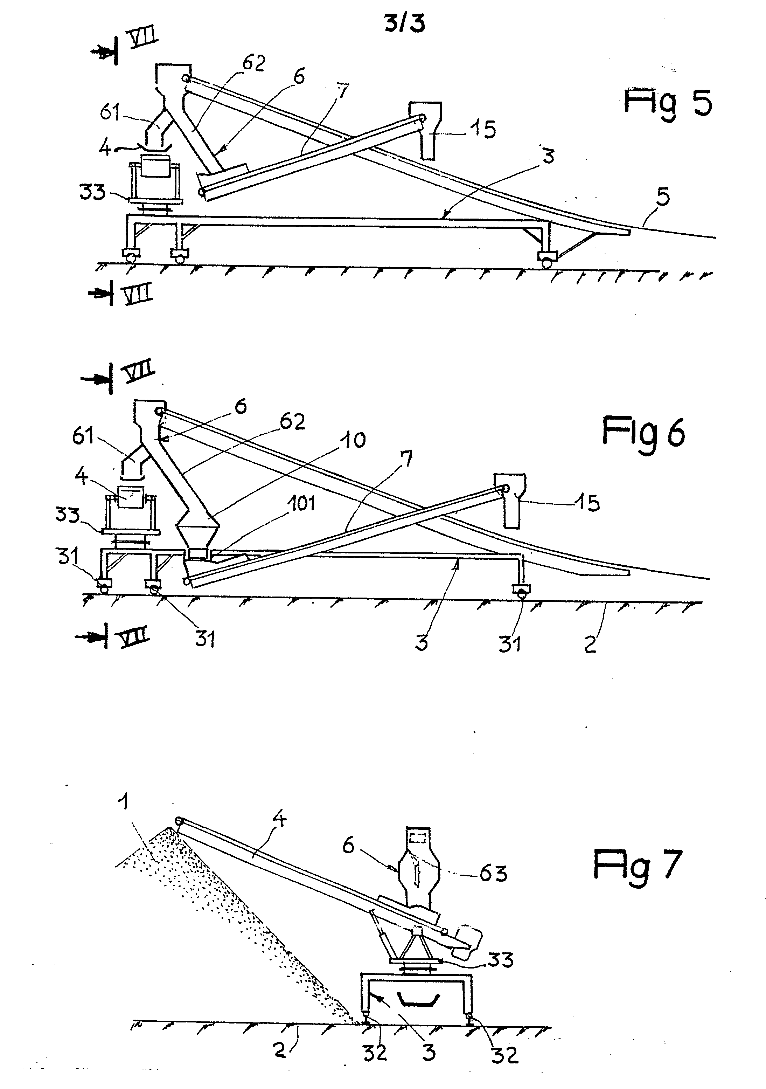

Dans le mode de réalisation des figures 5 à 7, les moyens d'accumulation et de recyclage sont constitués par un transporteur continu d'accumulation 7 du type à ruban qui est alimenté par la voie dérivée 62 de l'appareil de partage et qui alimente en recyclage, le transporteur continu principal 5, en amont du point de décharge de celui-ci dans le dispositif de partage. La matière est canalisée entre les transporteurs 7 et 5 par une goulotte de décharge 15.

Dans chacun des modes de réalisation des figures 2 à 4 et 5 à 7, la vitesse du transporteur d'accumulation 7 est variable et adaptée au débit reçu par la voie 62 du dispositif de partage 6 pendant la phase d'accumulation et adaptée au débit à recycler pendant la phase de recyclage. Cette vitesse est commandée par la position du volet du dispositif de partage 6 pendant la phase d'accumulation.

Dans le mode de réalisation des figures 6 et 7, les moyens d'accumulation et de recyclage sont constitués par un transporteur continu d'accumulation 7 qui est alimenté par la voie dérivée 62 du dispositif de partage 6 et qui alimente le transporteur continu principal 5 en amont du dispositif de partage. Ce transporteur d'accumulation 7 est associé à une trémie d'accumulation 10 qui est équipée en sortie d'un distributeur à débit variable 101. Cette trémie d'accumulation 10 alimente le transporteur 7 et reçoit la matière par la voie dérivée 62. A l'extrémité aval du transporteur d'accumulation 7, la matière est canalisée par une goulotte 15.

En variante du mode de réalisation des figures 6 et 7, la trémie 10 équipée de son distributeur, au lieu d'être placée entre le dispositif de partage et le transporteur d'accumulation, pourrait être placée entre ce dernier et le transporteur principal 5.

Dans le mode de réalisation de la figure 8, une trémie d'accumulation 16 équipée d'un distributeur à débit variable reçoit la totalité du courant de matière se déversant du transporteur continu principal 5. Un transporteur intermédiaire 17 est avantageusement disposé à la sortie de la trémie pour alimenter le transporteur continu de déversement latéral 4.

Le fonctionnement de l'installation selon l'invention va maintenant être expliqué. Dans le mode de réalisation des figures 2 à 7, lorsque le transporteur de déversement latéral 4 parcourt une portion extrême de sa course correspondant à une extrémité du tas, une partie du courant de matière est prélevée et accumulée. Cette phase d'accumulation est ensuite suivie d'une phase de restitution.

Dans le mode de réalisation de la figure 8, l'accumulation de matière est réalisée par la trémie 16.

Il est bien entendu que l'on peut sans sortir du cadre de l'invention imaginer des variantes et des perfectionnements de détails et de même envisager l'emploi de moyens équivalents.

En particulier l'invention s'applique à un appareil de mise en tas de type polaire dans lequel le transporteur continu de déversement pivote en étant animé de mouvements de va-et-vient et est alimenté dans la zone du pivot par un autre transporteur.

REVENDICATIONS

1.- Procédé de mise en tas de matière en vrac consistant à déverser la matière sur une aire de stockage au moyen d'un transporteur continu de déversement latéral alimenté par un transporteur continu principal et animé d'un mouvement de va-et-vient, caractérisé par le fait qu'il consiste à régler le débit d'alimentation du dit transporteur de déversement de manière à le réduire aux extrémités du tas et à accumuler dans un stock tampon l'excédent momentané de matière provenant de ces réductions de débit aux extrémités et à recycler ensuite cet excédent vers ledit transporteur de déversement latéral.

2.- Procédé selon la revendication 1, caractérisé par le fait qu'on régle le débit d'alimentation du transporteur de déversement latéral en partageant le courant de sortie du transporteur principal en deux veines et en réglant les débits relatifs de cesdeux veines, l'une allant directement au transporteur continu de déversement latéral, l'autre/étant accumulée et recyclée.

3.- Procédé selon la revendication 2, caractérisé par le fait qu'il consiste à recycler l'excédent de matière sur le transporteur continu principal en amont du point de partage du courant en deux veines.

4.- Procédé selon l'une quelconque des revendications précédentes caractérisé par le fait qu'il consiste à déplacer le point de début et de fin de réduction du débit de manière que la distance entre ce point et la pointe du tas côté début de reprise augmente et que la distance entre ce point et la pointe côté fin de reprise diminue au-fur-et-à-mesure de la constitution du tas.

5.- Appareil de mise en tas de matière déversable comportant un transporteur continu de déversement latéral (4) alimenté par un transporteur continu principal(5) dit de parc et animé d'un mouvement de va-et-vient, caractérisé par le fait qu'il comporte des moyens pour régler le débit d'alimentation dudit transporteur de déversement latéral (4) de manière à le réduire graduellement aux extrémités du tas et à accumuler dans un stock tampon l'excédent momentané de matière provenant de ces réductions de débit aux extrémités pour recycler cet excédent vers ledit transporteur de déversement latéral.

6.- Appareil selon la revendication 5, caractérisé par le fait que le transporteur continu principal(5)alimente un dispositif de partage (6) qui comprend d'une part deux voies (61,62) divisant le courant de matière en deux veines dont l'une (61) va au transporteur de déversement latéral (4) et dont l'autre (62) va à des moyens d'accumulation et de recyclage et d'autre

0088685

part des moyens de réglage (63) des débits relatifs de ces deux veines.

7.- Appareil selon la revendication 6, caractérisé par le fait qu'il comprend un transporteur continu d'accumulation (7) qui reçoit la matière par une voie (62) du dispositif de partage (6) et qui distribue la matière sur le transporteur continu principal (5), en amont dudit dispositif de partage (6).

8.- Appareil selon la revendication 7, caractérisé par le fait que le transporteur continu d'accumulation (7) est associé à une trémie (10) équipée d'un distributeur (101) à débit variable.

9.- Appareil selon l'une quelconque des revendications 5 et 6 caractérisé par le fait que les moyens d'accumulation et de recyclage sont constitués par un transporteur continu d'accumulation (7) qui est alimenté par une voie (62) du dispositif de partage (6) et qui distribue la matière au transporteur continu de déversement (4) en parallèle avec un transporteur continu intermédiaire (8) qui est alimenté par l'autre voie (61) du dispositif de partage (6).

10.- Appareil selon la revendication 5, caractérisé par le fait qu'il comporte une trémie d'accumulation (16) alimentée par le transporteur continu de parc (5) et équipée d'un distributeur à débit variable qui distribue la matière au transporteur de déversement latéral (4).

Fig 8

16

17

5

4

3

31

Fig 1

11

M'

D'

12

13

1

M

D

2

$\ell$

$\ell$

$\ell$

Fig 2

Fig 3

Fig 4

Fig 5

Fig 6

Fig 7

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int. Cl. ³) |
|---|---|---|---|
| A | FR-A-2 395 926 (BOURGOIN)<br><br>*Page 5, lignes 17-37; page 6, lignes 1-11; figures 1,3* | 1,3,5, 10 | B 65 G 69/10 |
| | | | **DOMAINES TECHNIQUES RECHERCHES (Int. Cl. ³)** |
| | | | B 65 G |

Le présent rapport de recherche a été établi pour toutes les revendications

| Lieu de la recherche | Date d'achèvement de la recherche | Examinateur |
|---|---|---|
| LA HAYE | 31-05-1983 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique.
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille. document correspondant

OEB Form 1503 03 82